## Europäisches Patentamt

## European Patent Office

## Office européen des brevets

(11) Publication number: **0 068 582**
**A2**

# EUROPEAN PATENT APPLICATION

(21) Application number: 82200778.7

(22) Date of filing: **23.06.82**

(51) Int. Cl.³: **C 02 F 3/34,** C 12 N 9/02, C 12 N 11/00

(30) Priority: **30.06.81 IT 8412781**

(43) Date of publication of application: **05.01.83**
**Bulletin 83/1**

(84) Designated Contracting States: **AT BE CH DE FR GB IT LI LU NL SE**

(71) Applicant: **Regazzo, Pier Giorgio, Via dei Livello, 45, I-35100 Padova (IT)**
Applicant: **D'Andrea, Federico, Via delle Magnolie, 14, I-35100 Padova (IT)**

(72) Inventor: **Regazzo, Pier Giorgio, Via dei Livello, 45, I-35100 Padova (IT)**
Inventor: **D'Andrea, Federico, Via delle Magnolie, 14, I-35100 Padova (IT)**

(74) Representative: **Piovesana, Paolo, Corso del Popolo, 70, I-30172 Venezia-Mestre (IT)**

(54) Purification process of water containing organic pollutants.

(57) The purification process of water containing organic pollutants involves the conveying of the water to be purified in a reactor (4) in which it undergoes a biochemical treatment with enzyme catalysis, when necessary combined with chemical and/or chemical-physical treatment.

The present invention relates to a purification process of water containing organic pollutants.

It is well known that water deriving from work processes or human settlements generally contains organic substances which are the main cause of the pollution of the water itself; for the process of degradation these substances require oxygen, which they extract from the water itself, thereby increasing the level of pollution. The so called "activated sludge" process is well known for the purification of water containing organic pollutants.

According to well known process the water to be purified is treated with a slush which is rich in aerobic microorganisms and subsequently conveyed into an aeration chamber, where it undergoes the injection of compressed air which permits the prolification of these microorganisms. These latter destroy the organic substances at a molecular level, breaking them down into hydrogen, carbon dioxide etc, with their activity as oxidants. On exit from the aeration chambers the water is passed into clarifiers or settling tanks where the activated sludge is deposited; the sludge is then extracted and can be reutilized in a new cycle.

A first drawback of this known process is that the oxidizing activity of the aerobic organisms is rather slow and the water must be kept in the oxidation tanks for long periods of time. For this reason the tanks must have a large capacity.

A second drawback is that some particular pollutants may poison the aerobic microorganisms, thus reducing the efficiency of the purification process and requiring long periods of time for the restoration of full efficiency.

A third drawback is that in order to avoid this poisoning and favour the prolification of the microorganisms it is necessary to inject some particular nutrients (ammonium salts, phosphates, etc.) into the tanks. It is, however, necessary to maintain the degree of concentration of these nutrients within well defined limits as too low a concentration will not prevent the poisoning of the microorganisms while too high a concentration will increase the level of pollution of the water itself.

A further drawback of this process is that facilities for the automatic testing of the pH level are necessary to hold this steady at a predetermined value (7-7.5): a different pH concentration will in fact inevitably damage the microorganisms, reducing their oxidizing action.

Another drawback is the formation of algae in the oxidation chambers: such parasitic flora not only reduces the supply of oxygen to the microorganisms, causing them to die, but also increase the degree of pollution and make the process of sedimentation more difficult.

Another well known process for the purification of water containing organic pollutants consists in its treatment with hydrogen dioxide. When added to the water to be purified this builds up a strong oxidizing action, causing the break-down of the organic pollutants.

However, since the oxidizing agent is no longer oxygen dissolved in the water but rather bound oxygen (in the form of peroxide), a first drawback of this process is that, given that hydrogen dioxide is highly toxic, at the end of the process of purification the water may be polluted with excess hydrogen dioxide which has not reacted with the pollutants.

Furthermore, despite the fact that hydrogen dioxide is a strong oxidizing agent, it has no purifying effect on some organic substances (hydrocarbons, long chain polymers, surface activants): hence at the end of the process the water may still be polluted both by the presence of hydrogen dioxide and by organic substances it was not able to degrade.

The object of the invention is to eliminate the drawbacks jointly and disjointly present in the known processes and realize a process which allows the easy and efficient elimination of organic substances present in the water.

A further object of the invention is to realize a process which can almost immediately supply the water with both the quantity of oxygen necessary for oxidizing the organic substances present in the water and the quantity of oxygen that these substances have extracted from the water being purified.

These objects are attained according to the invention by means of a purification process of water containing organic pollutants characterized in that the water to be purified is conveyed in a reactor, in which it undergoes a biochemical treatment with enzyme catalysis, when necessary combined with a chemical and/or chemical-physical treatment.

According to this invention, water to be purified can be treated with nascent oxygen produced by oxidizing enzymes.

Advantageonsly the oxidizing ezymes can be consist of catalasis and/or peroxidasis.

Advantageonsly the enzymes may be fixed on bases which are chemically reactive with respect to the enzymes themselves.

According to the invention, the enzymes can be fixed onto bases with a high surface development.

The invention is hereinafter further clarified in two preferred embodiments with reference to the enclosed drawings, in which:

fig. 1 shows the flow diagram of the process according to the invention in a first embodiment,

fig. 2 shows the flow diagram of the process in a second embodiment, and

fig. 3 represents in a schematic form a purifier for carrying out the process shown in figure 1.

As shown in the drawings the purification process according to the invention comprises an initial phase, in which the flow of polluted water 1 is undergone to a series of physical process treatments PF, for example sedimentation, centrifugation, magnetic separation and/or electrostatic separation for a preliminary purification of pollutants having a high granulometry and/or molecular weight. Subsequently this flow is combined with hydrogen dioxide from a tank 2 and undergoes a chemical-physical treatment in an aspecific adsorption column 3. The filling of this column 3 consists of a mixture of organic and inorganic compounds with a high capacity of adsorption and an extensive contact surface, for example a mixture of powdered polyurethane, activated carbon and sand in equal parts.

On exit from column 3 the water undergoes an oxidation treatment with enzymes. This treatment is carried out in a column 4 having a specific biological action and containing an activated base on which specific enzymes, catalasis and oxidasis, have been fixed.

The activated base is formed of small pieces of nylon, cellulose powder, sand, hollow fibres etc. These enzymes have the function of metabolizing the hydrogen dioxide into water and nascent oxygen, the latter to be used immediately and almost entirely for the process of purification. Water coming out of column 4 is by now purified.

From all that has been said above it clearly results that the process according to the invention presents several advantages and in particular:

- a limited water volume and brief purification times,

- simple maintenance due to the modular form of the plant which allows the simple substitution of the columns,

- simple operating,

- a mobility of the plant so it may be easily transported to the place of use,

- the almost total absence of mechanical parts,

- very low energy consumption,

- the absolute absence of toxicity.

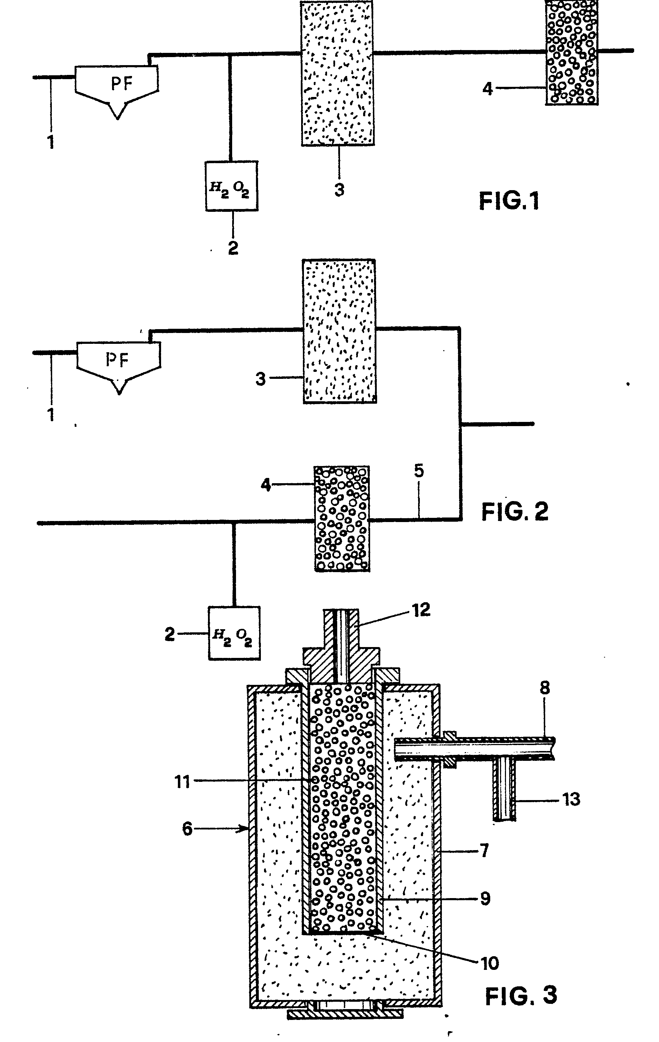

To realize the above described process an adsorption column 6, composed of a cylindrical external shell 7 (see figure 3) provided with a lateral duct 8 to feed in the flow of water to be purified is used. Within the external shell there is a further coaxial column 9 which has a porous baffle 10 at its base which allows the exchange of fluids but not of solids.

A large number of small pieces of nylon 11 and other material which reacts chemically with the oxidizing enzyme are contained within the column and form the base for the enzyme.

Column 9 is also provided with a duct 12 in the upper part for the exit of the purified water.

A further duct 13 is inserted into the lateral duct 8 through which the hydrogen dioxide is fed in from a tank (not represented in the drawings).

In the operating phase the water to be purified, to which has been added hydrogen dioxide, is introduced inside column 6 via duct 8, where it undergoes a chemical physical process of purification. The flow of water, after having crossed the porous baffle 10, enters column 9 where the enzymes in contact with the hydrogen dioxide can carry out the oxidation. From here the by now purified water exits via the upper duct 12.

In another embodiment (see fig. 2) the process according to the invention foresees that the aspecific adsorption column 3 and column 4, containing the enzymes, are fed respectively with the water to be purified 1 and the hydrogen peroxide from tank 2. In this embodiment the flow of water 1 coming out of column 3 is mixed with the flow of nascent oxygen 5 developed in column 4 following enzyme catalysis.

This process maintains the advantages listed above and also gives the further advantage of preventing the poisoning of the enzymes by any pollutants which were not extracted in the aspecific adsorption column 3.

C L A I M S

1. Purification process of water containing organic pollutants characterized in that the water to be purified is conveyed in a reactor (4,6) inside of which it undergoes a biochemical treatment with enzyme catalysis, when necessary combined with a chemical and/or chemical physical treatment.

2. Process according to claim 1 characterized in that the water to be purified is treated with nascent oxygen produced by oxidizing enzymes.

3. Process according to claims 1 and 2 characterized in that the oxidizing enzymes consist of catalasis and/or peroxidasis.

4. Process according to claim 1 characterized in that the enzymes are fixed on bases which are chemically reactive with respect to the enzymes themselves.

5. Process according to claim 1 characterized in that the enzymes are fixed on bases having a high surface development.

6. Process according to claim 1 characterized in that the water to be purified undergoes a chemical and/or chemical physical treatment and a treatment by enzyme catalysis in operatingly differentiated columns (3,4).

7. Process according to claims 1 and 6 characterized in that the columns (3,4) for the chemical and/or chemical physical treatment and for enzyme catalysis are connected in series.

8.      Process according to claims 1 and 6 characterized in that the columns (3,4) for the chemical and/or chemical physical treatment and for enzyme catalysis are connected in parallel.

9.      Process according to claims 1, 6 and 7 characterized in that the columns (3,4) for the chemical and/or chemical physical treatment and for enzyme catalysis are connected in series one inside the other, concentrically, and are located within a single external cylindrical shell (7).

10.      Process according to claims 1 and 9 characterized in that the columns (3,4) are separated by a porous baffle (10).

FIG.1

FIG. 2

FIG. 3